(19) **Europäisches Patentamt**
**European Patent Office**
**Office européen des brevets**

(11) **EP 1 662 823 B1**

(12) **EUROPEAN PATENT SPECIFICATION**

(45) Date of publication and mention
of the grant of the patent:
**30.01.2008 Bulletin 2008/05**

(51) Int Cl.:
*H04Q 7/36* (2006.01)     *H04Q 7/38* (2006.01)

(21) Application number: **04425876.2**

(22) Date of filing: **24.11.2004**

(54) **Method and apparatus for users reshuffling in digital cellular communication systems**

Verfahren und Vorrichtung zur Teilnehmer-Umbesetzung in einem digitalen zellularen Kommunikationssystem

Procédé et dispositif pour la redistribution des abonnés dans un réseau de communication cellulaire numérique

(84) Designated Contracting States:
**AT BE BG CH CY CZ DE DK EE ES FI FR GB GR HU IE IS IT LI LU MC NL PL PT RO SE SI SK TR**

(43) Date of publication of application:
**31.05.2006 Bulletin 2006/22**

(73) Proprietor: **Siemens S.p.A.**
**20126 Milano (IT)**

(72) Inventors:
• **Gangai, Stefano**
**20127 Milan (IT)**
• **Laghigna, Massimo**
**27029 Vigevano (PV) (IT)**
• **Montanari, Fabio**
**20080 Basiglio (MI) (IT)**

(56) References cited:
**EP-A- 1 424 865**          **WO-A-01/10155**

• **FURUYA Y ET AL: "CHANNEL SEGREGATION, A DISTRIBUTED ADAPTIVE CHANNEL ALLOCATION SCHEME FOR MOBILE COMMUNICATION SYSTEMS" IEICE TRANSACTIONS, INSTITUTE OF ELECTRONICS INFORMATION AND COMM. ENG. TOKYO, JP, vol. E74, no. 6, 1 June 1991 (1991-06-01), pages 1531-1536, XP000262310 ISSN: 0917-1673**
• **SHOJI T ET AL: "Dedicated priority function SEG for TD-CDMA cellular system" VEHICULAR TECHNOLOGY CONFERENCE, 2000. IEEE VTS FALL VTC 2000. 52ND SEPT. 24-28, 2000, PISCATAWAY, NJ, USA,IEEE, vol. 4, 24 September 2000 (2000-09-24), pages 1784-1788, XP010524336 ISBN: 0-7803-6507-0**

EP 1 662 823 B1

**Description**

<u>Field of the Invention</u>

The present invention refers to digital cellular communications systems and is particularly concerned with a method and an apparatus for users reshuffling in one such system.

More specifically, the invention can be applied in digital cellular systems with the following physical layer characterisation:

- time division duplexing (TDD), i.e. different time slots of the radio frame are allotted to uplink and downlink transmission;
- frequency division, time division and code division multiple access (FDMA, TDMA and CDMA), i.e. a basic radio resource unit is identified by one frequency, one time slot and one code;
- reuse of frequencies theoretically equal to 1, i.e. adjacent cells can be equipped with the same set of frequencies;
- splitting of the radio channels (channel = frequency/time slot) among adjacent cells based on a Channel Segregation algorithm, i.e. each cell tends to use the less interfered channels and mutually interfering cells tend to share in a dynamic and adaptive way the available channels according to the current traffic conditions and to the cell-specific radio environments.

UMTS (Universal Mobile Telecommunication System) TD-CDMA, described in 3GPP (Third Generation Partnership Project) Specifications, and TD-SCDMA (TD-Synchronous CDMA), described in CWTS (China Wireless Telecommunication System) Specifications, can be mentioned as examples of systems meeting the above requirements.

<u>Background of the Invention</u>

The radio resources in digital cellular communications systems are limited, like in any radio communication system, and therefore a same frequency can be allotted to different cells according to specific rules depending on the kind of system.

As a consequence, different user equipments (UEs) can use the same frequency at the same time and interference among the respective signals can arise when the users are sufficiently close to one another.

This problem becomes even more critical in the systems the present invention refers to, as in principle the same frequency can be equipped on adjacent cells.

Moreover, the signals can be subjected to other kinds of noise and distortion, affecting their quality.

In order to be allocable to a communication, a radio channel must meet certain interference and quality criteria.

Since the channel conditions vary in time and with the user position, it is customary to split the radio channels among adjacent cells (Channel Segregation) and to allocate the radio channels to the requesting UEs (Channel Selection) according to a dynamic process, generally called DCA (Dynamic Channel Allocation), based on measurements of the interference and/or the carrier-to-interference ratio carried out by both the UEs (for the downlink direction) and the base stations (for the uplink direction).

For the DCA, some systems directly exploit the measurements of interference and carrier-to-interference ratio, as disclosed for instance in US-A 5 956 642.

Other systems exploit the so-called "priority", which is a parameter representative of the probability that in a certain channel of a cell the interference generated by other cells or frequencies is lower than a given threshold.

Examples of the latter systems are disclosed in the document "Channel Segregation, a Distributed Adaptive Channel Allocation Scheme for Mobile Communication Systems", by Y. Furuya and Y. Akaiwa, IEICE Transactions, Vol. E 74, No. 6, June 1991, pp. 1531-1537, and in EP-A 1 198 964.

As a non-limiting assumption, the system concerned by the present invention is supposed to exploit the priority in order to perform the DCA. The skilled in the art will have of course no difficulties in adapting the formulation of the invention provided hereinbelow to other systems with DCA based on different mechanisms.

The invention is focused on that part of DCA that is in charge of allocating radio resources to a UE requesting a service (channel selection).

As a general criterion, channel selection should try to:

1) minimise the overall interference level experienced by the users, and
2) optimise the use of the available bandwidth (or, in other words, maximise the number of served users).

According to the current state of the art, the channel selection algorithm generally allocates to any incoming UE the less interfered channels (i.e. the channels with the highest priority values, with the assumptions made above for the present invention) based on the output provided by the channel segregation. An example of such a state of the art is disclosed in EP-A 1 204 287.

As a matter of fact, it can be easily proved that an algorithm performed according to such a rough criterion allows the network to optimise the channel segregation process and to minimise the overall interference level experienced by the users, but leads to a waste of bandwidth or, in other words, to a reduction of the number of served users with respect to the theoretical one.

More generally, it can be also proved that requirements 1) and 2) mentioned above cannot be fulfilled at the same time, i.e. any algorithm which guarantees the minimisation of the overall interference level experienced by the users cannot maximise the number of served users, and vice versa.

A contribution to maximising bandwidth exploitation is to allow a reuse, by users located in areas not affected by inter-cell interference, of channels contended among adjacent cells.

For supporting the channel reuse a continuous reordering of the resources assigned to the users (reshuffling) should be performed.

EP-A 1 204 287 discloses a reshuffling procedure for CDMA/TDD systems, according to which procedure an intra-cell handover is performed in response to changes in the resource occupation situation of the system. The reshuffling is intended for maintaining the "code pooling" state to optimise channel segregation. "Code pooling" denotes a procedure that aims at attaining a better carrier exploitation efficiency by decreasing the number of slots to be occupied and increasing the number of codes multiplexed for each slot. The reshuffling is triggered by a call request/termination or by the elapsing of a given time. Channel segregation does not allow a complete radio resource reuse among different cells, so that bandwidth exploitation throughout the system is not optimised. User pathloss is not taken into account.

EP-A 1 198 964 discloses a user reshuffling based on a pathloss evaluation and intended to allocate to an incoming user a better set of resources in terms of interference and pathloss level. According to that document, once a time slot with the necessary resources for the service requested by the incoming user has been found, the system searches, in higher priority time slots, an ongoing service using the same number of resources, compares the pathloss of the signals of the requesting user and of the ongoing service, if any, found with the search and, consequently, either allocates the service of the requesting user or the ongoing service in that time slot. The reshuffling is performed also at each service termination. The known method, which is performed only at the channel allocation/release and which involves only users that are using the same number of resources as the allocated/released service, is scarcely flexible and it does not lead to a complete radio resource reuse and hence to an optimisation of the bandwidth exploitation.

Object of the Invention

The present invention just aims to overcome all these problems, by providing a refined and complete algorithm of users reshuffling that is carried out also independently of the allocation/release procedures, and that does not impose constraints on the resources allotted to the concerned users.

Summary of the Invention

According to the invention, this is attained by the method as claimed in claim 1 and the apparatus as claimed in claim 18.

More particularly, the method comprises the steps of:

- identifying high-pathloss active users experiencing a pathloss exceeding a pathloss threshold and selecting at least one of such high-pathloss active users as a candidate for reallocation on a better quality channel;
- searching candidate alternative allocations for said selected user;
- selecting the best one, in terms of a first value of an interference-related quantity, among said candidate alternative allocations;
- comparing said best candidate alternative allocation and the allocation currently assigned to said selected user; and
- if the comparison reveals that said best candidate alternative allocation is better, in terms of said first value of the interference-related quantity, than the allocation currently assigned to said selected user, reallocating said selected user on said best candidate alternative allocation.

Preferred features of the method are set forth in claims 2 to 17.

The apparatus of the invention, which is part of the radio transmission control units of the cellular communication system, is connected to a receiver and comprises: means for evaluating and storing values of the pathloss of signals transmitted by the users, and means for evaluating and storing values of an interference-related quantity for the resources allocated or allocable to said users. The apparatus further comprises:

- a first processing unit, connected to the means for storing the values of the pathloss and the interference-related quantity, and arranged to: identify high-pathloss active users potentially reallocable on better quality resources; select at least one of such high-pathloss active users as a candidate for reallocation; and request the reallocation of said selected user on a new allocation meeting predetermined interference requirements;
- a second processing unit, connected to said first processing unit and to the means for storing the values of the interference-related quantity, and arranged to: identify candidate alternative allocations for said selected user; select, as a potential new allocation for said selected user, the best one, in terms of said interference-related quantity, among said candidate alternative allocations; and provide said first processing unit with information about the selected alternative allocation; and
- an arithmetic unit, connected to said means for storing the interference-related quantity and to said first and second processing units, and arranged to compute at least an average value of said interference-related quantity for both the candidate alternative allocation selected as a potential new allocation and an allocation currently assigned to said selected user, said arithmetic unit computing said average value, for each allocation, over all time slots concerned by the allocation and weighting said value by the number of resource units concerned by the allocation, and providing said first and second processing units with the calculated average values:

said first processing unit being further arranged to compare the average values of said interference-related quantity for said potential new allocation and for the allocation currently assigned to said selected user and to request the reallocation of the selected user on said potential new allocations if the comparison reveals that the average value of the interference-related quantity is better for said potential new allocation than for the current allocation.

Preferred features of the apparatus are set forth in claims 19 to 22.

Brief description of the drawings

A preferred embodiment of the invention, given by way of non-limiting example, will now be disclosed with reference to the accompanying drawings, in which:

- Fig. 1 is a block diagram of a channel selection apparatus;
- Fig. 2 is a general flow chart of the channel selection method;
- Fig. 3 is a flow chart of the operations relevant to the best allocation identification on a carrier assigned to a cell;
- Fig. 4 is a flow chart of the operations relevant to the carrier selection;
- Fig. 5 is a block diagram of a reshuffling apparatus according to the invention; and
- Fig. 6 is a flow chart of the reshuffling method according to the invention.

Description of the preferred embodiments of the Invention

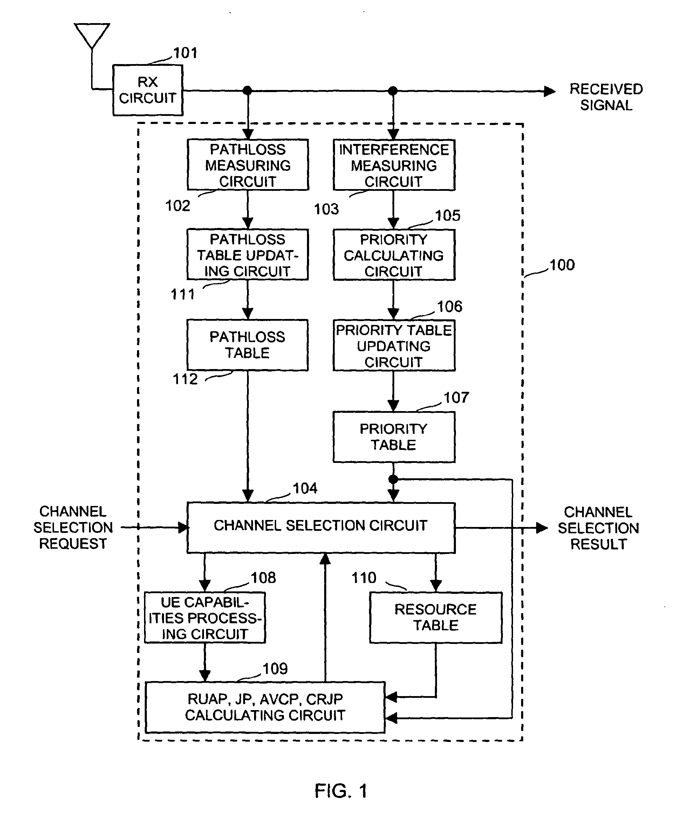

In Fig. 1, the apparatus for implementing the channel selection used in the invention is generally denoted 100. As said before, the cellular system in which apparatus 100 is to operate is a TDD multi-carrier, multi-slot cellular communication system, for instance a system conforming to 3GPP or CWTS specifications. By using the terminology of 3rd generation systems, apparatus 100 is part of the Radio Network Control of the system.

It is implicitly assumed that the concerned system provides for a reuse of frequencies theoretically equal to 1 and a splitting of the radio channels among adjacent cells based on a conventional channel segregation algorithm.

No hypotheses are needed for the number of uplink and downlink time slots per radio frame, nor for the number and the locations of the switching points, nor yet for the number of frequencies equipped in the cells, since those features are not at all concerned by the invention.

Apparatus 100 is coupled to the output of a receiver 101, providing the received signal to be suitably processed, e.g. despread, demodulated, etc.

Suitable separation circuits (not shown) extract from the received uplink signal flow the information allowing determining the pathloss and the interference of the communication and send such information to a pathloss measuring circuit 102 and an interference measuring circuit 103 in apparatus 100.

The results of the pathloss measurements are written into a pathloss table 112 through a pathloss table updating circuit 111 and are read by a processing unit 104 (channel selection unit), which is the unit actually implementing the channel selection algorithm.

The results of interference measurements, in the preferred embodiment of the invention, are converted by priority calculation circuit 105 into priority values. The priority values are written into a priority table 107 through a priority updating circuit 106 and are read by channel selection unit 104. The manner in which the priority can be calculated and updated is well known to the skilled in the art and is described for instance in the document by Furuya et al. or in EP-A 1 204 287 mentioned above.

The manner in which the priority and the pathloss values are exploited by channel selection unit 104 will be explained below.

Channel selection unit 104 processes the channel selection requests coming from the users and aims at allocating services in the frequency-time-code matrix in such a way that:

- services are allocated in time slots with higher priority;
- services in higher priority time slots have higher pathloss.

The algorithm should work trying to achieve in a dynamic and adaptive way:

- a channel partitioning, i.e. adjacent cells achieve dynamically a splitting (segregation) of the channels used to serve UEs located in mutually interfered areas, wherein the splitting tends to assign the channels to adjacent cells proportionally to the offered traffic and to allow a cell to use the less interfered channels;
- a channel reuse, i.e. the same channels are reused by adjacent cells to serve UEs located in areas not affected by inter-cell interference.

The channel partitioning involves two aspects: carrier partitioning and carrier based user clustering.

The carrier partitioning aims at splitting whole carriers rather than individual time slots among adjacent cells. Indeed, taking into account that a service request must be serviced by time slots on a single carrier, this choice:

- makes easier for channel selection to meet the UEs spacing constraints at the switching points;
- makes easier for channel selection to allocate the services exploiting the UEs multi-slot capabilities; and
- decreases the frequency switching as a consequence of time slot changes in case a dynamic frequency allocation is applied.

In order to meet this requirement channel selection shall allocate new services on the carrier with the highest overall priority.

The carrier based user clustering aims at clustering the users of a cell on a per carrier basis (i.e. the users distribution over the carriers shall be as less uniform as possible), due to the following reasons:

- it makes easier to achieve the carrier partitioning;
- it decreases the probability that, even if the overall bandwidth provided by the time slots of a cell is higher than the bandwidth requested by the incoming service, the service can not be allocated because the bandwidth provided by each individual carrier is not enough.

In order to meet this requirement channel selection shall allocate new services on the carrier with the highest number of allocated users.

Note that carrier based user clustering is a special case of time slot based user clustering, in the sense that clustering the users on a carrier leads also to a clustering in the individual time slots. This feature makes achieving channel segregation easier.

For identifying a channel, unit 104 must select uplink and downlink time slots (TSs) guaranteeing the service being requested, taking into account that the basic resource units (RUs), i.e. the codes, to be allocated for each direction may belong to different time slots but must be on a same carrier. Each subset of time slots in the radio frame that can be used for the allocation of a service on a carrier will be referred to in the following description as "service allocation". Essentially, a service allocation is thus a set of time slots meeting the following conditions:

- at least one uplink time slot and one downlink time slot are included in the set;
- the number of unused resources available in the set of time slots is at least equal to the number of the resources requested by the service;
- each time slot in the set passes the admission control, i.e. its priority is higher than a minimum priority threshold, configurable via O&M (Operation and Maintenance) for both the uplink and the downlink time slots, respectively.

A service allocation provides also information about the total number of basic radio resource units to be used in each time slot of the set.

In the most general case, a number of different service allocations could be available on a carrier and, if the cell is equipped with more than one carrier, service allocations may be available on several carriers. Thus, channel selection unit 104 must compare the service allocations available.

Moreover, as stated before, the channel selection method also takes into account UE-specific requirements concerning the UE spacing constraints at the switching points and the UE multi-slot capabilities in both uplink and downlink direction. For a given carrier Ci, a given service and a given UE, the term "suitable allocation" will be used in the following description and in the flow charts to denote a service allocation meeting also such UE-specific requirements.

The information necessary for taking into account those further requirements are extracted by channel selection unit 104 from the channel selection request and are processed in UE-capabilities processing circuit 108.

For selecting the channel to be allocated to an incoming request, channel selection unit 104 will have to compare the different suitable allocations identified. For such a comparison, unit 104 evaluates the following quantities:

- Resource Unit Average Priority (RUAP), given by:

$$RUAP(service\_allocation) = \frac{\sum_{TSi \in service\_allocation} P(TSi) \cdot num\_RU(TSi)}{\sum_{TSi \in service\_allocation;} num\_RU(TSi)} \qquad (1)$$

where:

- P(TSi) is the priority value of a time slot i candidate for the service allocation;
- num_RU(TSi) is the number of RUs allocated to the service in time slot i.
- RUAP is thus a weighted average of the priority, computed over all time slots concerned by a service allocation.
- Joint Priority (JP) of all time slots used for a service allocation, i.e.:

$$JP(service\_allocation) = \prod_{TSi \in service\_allocation} P(TSi) \qquad (2)$$

- JP is a quantity that can be evaluated for allocations having the same number of time slots.
- carrier AVailable CaPacity (AVCP), given by:

$$AVCP(Ci) = \sum_{TSi \in Ci; P(TSi) \geq MinPr} num\_available\_RU(TSi) \qquad (3)$$

where:

- Ci is a generic carrier equipped in the cell;
- MinPr is the minimum priority threshold mentioned above;
- num_available_RU(TSi) is the number of RUs in idle state in time slot i of a carrier.
- CaRrier Joint Priority (CRJP), given by:

$$CRJP(Ci) = \prod_{TSi \in Ci} P(TSi) \qquad (4)$$

Quantities RUAP, JP, AVCP, CRJP are calculated by an arithmetic unit 109, which has access for reading to priority table 107 and to a resource table 110, written by channel selection circuit 104 and including e.g. information about the idle/busy status of any resource and, for busy resources, about the active channel currently using them. Moreover, arithmetic unit 109 receives the output of circuit 108 processing the UE capabilities.

As usual, the result of the channel selection is communicated by the Radio Network Control to the Node B and then forwarded to the UE.

The channel selection algorithm is now disclosed in more detail.

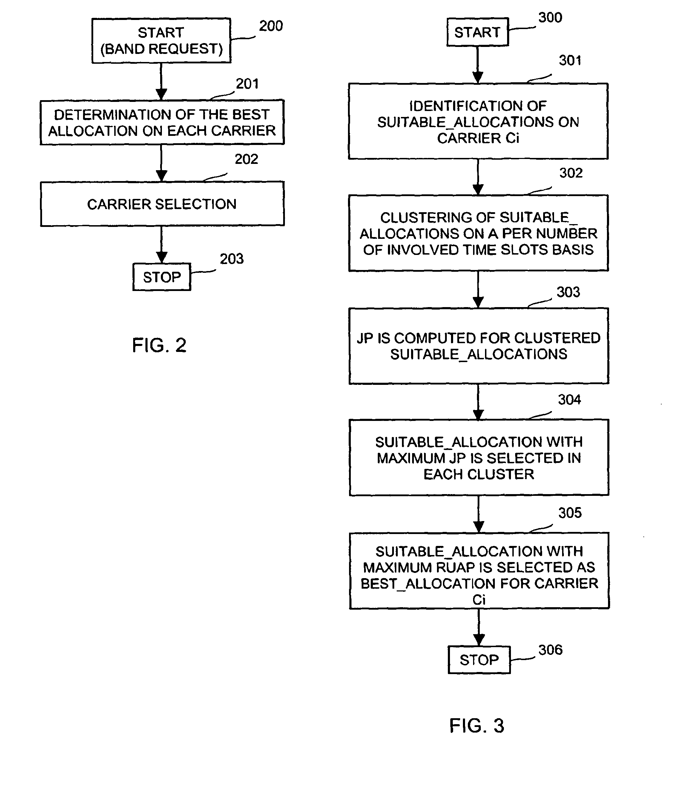

As shown in Fig. 2, the algorithm is started by a band request by a user, hereinafter referred to as "new user". The request can arrive from either a user becoming active or an already active user needing further resources. Essentially, the algorithm comprises two steps. The first step 201 is the determination of the best allocation on each carrier that may support the service, that is the determination of the time slots and the codes. The second step 202 is the carrier selection, resulting in the final channel allocation. Of course, it may happen that no carrier can offer a service allocation, in which case the allocation fails and the request is rejected.

The determination of the best allocation on a carrier is now described with reference to Fig. 3.

After the start (step 300, corresponding to step 200 of Fig. 2), the first step 301 is the identification of the suitable allocations on the carrier.

Assuming that more than one suitable allocation has been found at step 301, a priority-based comparison among the different options is effected. To this aim, the suitable allocations returned by step 301 are clustered according to the number of time slots used (step 302), JP is computed for the suitable allocations in a same cluster (step 303) and the suitable allocation with the maximum JP is selected (step 304) for each cluster. If more than one cluster has been built at step 302, and hence more than one suitable allocation has been found at step 304, the allocation with maximum RUAP is selected at step 305 as the best allocation for carrier Ci. The process for carrier Ci is thus terminated (step 306).

Of course, if only one allocation is found at step 301, the search for the best allocation is immediately concluded. Similarly, if only one cluster is returned by step 302, step 304 gives the best allocation for the carrier.

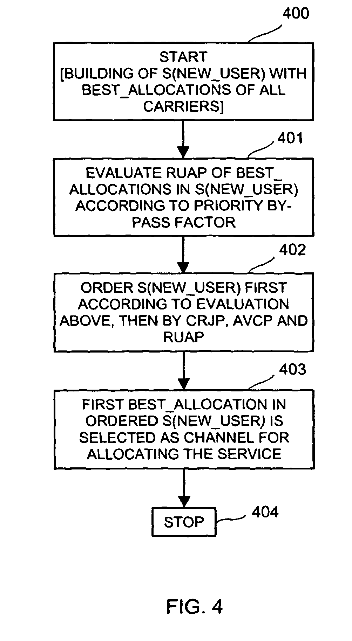

For the carrier selection (Fig. 4), the algorithm starts (step 400) when the algorithm of Fig. 3 has run for all carriers. If only one allocation has been found, that allocation will be of course the final one.

Let be S(new_user) the set of best allocations found with the best allocation search on the different carriers.

Assuming that S(new_user) contains more than one best allocation, at step 401 the RUAPs of such allocations are evaluated to create two subsets S1(new_user), S2(new_user) of best allocations.

More particularly, S1 (new_user) is the subset of best allocations having a respective RUAP fulfilling the following inequality:

$$\mathrm{RUAP(best\_allocation(Ci))} \geq \{\max_j [\mathrm{RUAP(best\_allocation(Cj))}]\} \cdot \theta \qquad (5)$$

where $\theta$ is an O&M parameter, whose value ranges from 0 to 1. S2(new_user) is the subset of the remaining best allocations in S(new_user). The meaning of parameter $\theta$, referred to as "priority by-pass factor" in the flow chart, will be discussed below.

Then set S(new_user) is ordered as follows (step 402):

- the best allocations in S1(new_user) are considered with priority over the ones in S2(new_user);
- among the best allocations in S1(new_user), those related to the carriers with higher CRJP value are considered first, that is the allocations are sorted in descending order of CRJP (this implements the Carrier Partitioning criterion);
- if the previous comparison returns more than one best allocation, those related to the carriers with lower AVCP value are considered first (sorting in descending order of occupation: this implements the Carrier Based User Clustering criterion);
- the best allocations in S2(new_user) are ordered according to a decreasing RUAP value criterion.

The first best allocation in S(new_user) according to its ordering is then selected to allocate the service for the new_user (step 403) and the algorithm ends (step 404).

From the above considerations, it follows that parameter $\theta$ allows the operator to decide whether, and to what extent, to take into account the carrier-related parameters. Otherwise stated, $\theta$ allows the operator to "adjust" the trade-off between minimisation of the interference and maximisation of bandwidth exploitation. In general, $\theta$ is always set close to 1, which corresponds to allotting the greatest importance to minimisation of interference.

The invention meets also the channel reuse requirement. The basic criterion adopted to achieve reuse is assigning the channels with higher priority values to the UEs with higher pathloss values: this is dictated by the fact that it is likely that such higher pathloss users are farther from the base station, so that they are potentially more subject to inter-cell interference than UEs with low pathloss, which are likely closer to the base station.

This requirement is met by means of users reshuffling processes, that is by means of a continuous reordering of the resources assigned to the active users, in order to keep track of all variations in the allocation state and radio characteristics of the resources.

In particular, this reshuffling procedure shall be performed at the occurrence of the following triggers:

- resource allocation (e.g. connection setup, connection upgrading by addition of some radio resources);
- resource release (e.g. connection release, connection downgrading by removing some radio resources);
- channel priority value updating;
- user pathloss variation.

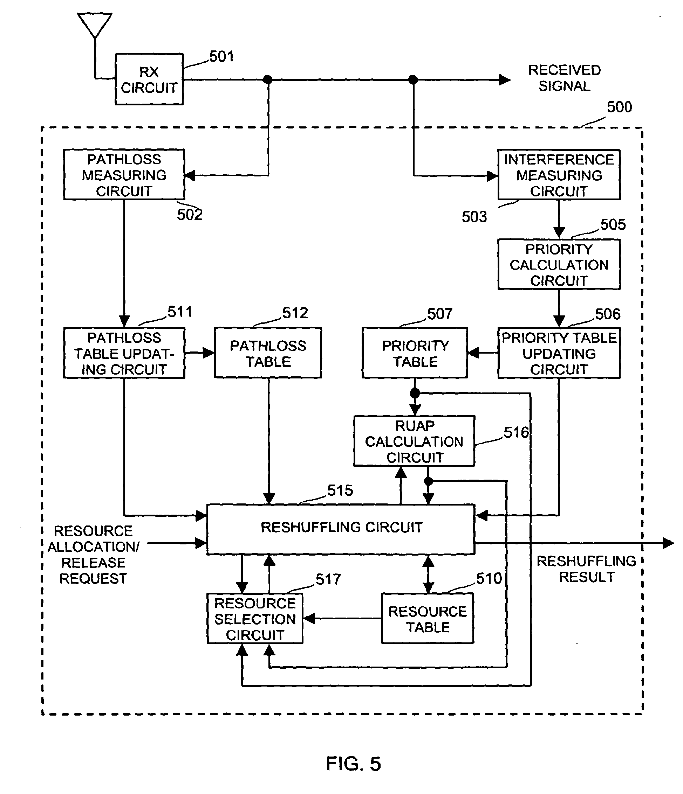

An apparatus performing the reshuffling is shown in Fig. 5, and is denoted 500. The reshuffling procedure is based on the evaluation of the pathloss and selects the resources to be allotted to users being reshuffled substantially by means of the channel selection procedure disclosed above. Apparatus 500 therefore includes elements shown also in Fig. 1, and such elements are denoted by similar reference numerals, beginning here with digit 5.

More particularly, similarly to apparatus 100 in Fig. 1, apparatus 500 is coupled to the output of receiver 501 and it includes pathloss measuring circuit 502 with the associated pathloss table 512 and pathloss table updating circuit 511, and interference measuring circuit 503 with the associated priority calculation circuit 505, priority table 507 and priority updating circuit 506.

Whenever a channel priority or user pathloss variation occurs, updating circuits 506, 511 provide an activating or triggering signal to a processing unit 515 (reshuffling circuit), which is the unit performing the logic operations required by the reshuffling algorithm, disclosed below. Circuit 515 receives also, as further triggering signals, the resource allocation or release requests from the users. For performing the algorithm, circuit 515 cooperates with a circuit 516 calculating the resource unit average priority RUAP and with a resource selection circuit 517, and has also access to resource table 510 for writing and reading. The latter is also read by resource selection circuit 517.

Resource selection circuit 517 substantially performs the tasks of the whole of blocks 104, 108, 110 in Fig. 1, apart from the RUAP calculation that has been allotted to a distinct block 516 (supplying circuit 517 with the calculated RUAP values), since the RUAP evaluation plays an important role in the reshuffling circuit.

The result of the reshuffling algorithm is the selection of a new allocation for one or more high-pathloss users and, possibly, for a number of low-pathloss users that are to release resources needed by high-pathloss users. Similarly to the result of channel selection in the apparatus shown in Fig. 1, that result is communicated to the Node B by the Radio Network Control of which apparatus 500 is part, and then forwarded to the concerned UE(s).

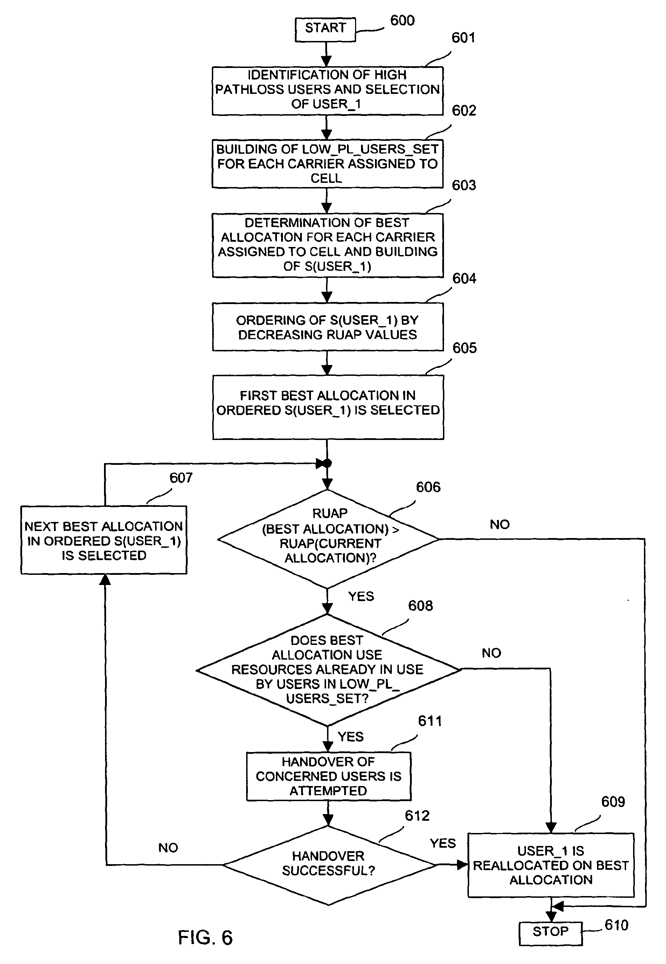

The reshuffling algorithm is disclosed in detail in Fig. 6 for a single user. The start (step 600) is any of the triggers mentioned above.

As said, the reshuffling process aims at allotting higher-priority channels to higher-pathloss users (likely farther from the base station and potentially more subjected to inter-cell interference). Therefore, the first operations are to select on the one hand high-pathloss users to be reallocated to a better channel and on the other hand low-pathloss users that could in turn be reallocated to leave resources available for high-pathloss users, if necessary.

To this end, at step 601, the active users whose pathloss PL is higher than a threshold PL_thr are identified by looking at pathloss table 512, and the one with the lowest RUAP value is selected. Let this user be the user_1, allocated on current_allocation(Cw) on carrier Cw. The PL_thr parameter should be an O&M attribute, configurable according to the cell radius.

At step 602, the users having a pathloss such that

$$PL < PL(user\_1) - PL\_ratio\_factor \qquad (6)$$

are identified on the carriers assigned to the cell. Also PL_ratio_factor is an O&M parameter. Let Low_PL_Users_Set (Ci) be the set of users meeting condition (6) on generic carrier Ci.

Then, at step 603, the best allocation selection procedure is run for user_1 on the different carriers Cj, according to the algorithm disclosed with reference to Fig. 3. On each carrier Cj, the algorithm runs as if the resources used by the users in the relevant Low_PL_Users_Set were available for user_1. The suitable allocations among which the search is performed must of course have the same characteristics as the current allocation of user_1, that is they must meet both priority criteria set by the admission control and the requirements in terms of spacing constraints at the switching points and multi-slot capabilities of the concerned user equipment.

As already discussed, the algorithm returns at most one allocation per carrier, such allocations forming a set S(user_1) that is then ordered according to RUAP value (step 604).

The algorithm then scans the best allocations in the ordered set S(user_1) according to a decreasing RUAP value criterion and the first best allocation in the ordered set S(user_1) (that is, the allocation with the highest RUAP) is considered (step 605). Then a check is made on whether the considered allocation has better interference characteristics than the current one, namely whether it meets the condition:

$$RUAP(best\_allocation(Cz)) > RUAP(current\_allocation(Cw)) \qquad (7)$$

(step 606), where Cz is the carrier which the first best allocation found for user_1 belongs to.

If condition (7) is not met, reshuffling is not performed and the algorithm stops (step 610).

If or when condition (7) is met, there is checked (step 608), by looking at table 510 (Fig. 5), whether the best allocation so found uses resources already in use by some users in Low_PL_Users_Set(Cx), where Cx is the carrier which the best allocation being considered (best_allocation(Cx)) belongs to.

In the negative, user_1 is reallocated on best_allocation(Cx) and the algorithm stops (steps 609, 610).

In the affirmative, the algorithm attempts to handover the users occupying such resources (step 611).

First, it is attempted to handover them on the same carrier Cx, by changing only the resources to be made available for user_1. In case x = w, the resources used by user_1 shall be considered available for the handover attempt.

It should be remarked that, as the users in Low_PL_Users_Set(Cx) have low pathloss, no search for the best allocation according to the channel selection algorithm is performed for them, but only suitable available resources are looked for in table 510 (Fig. 5).

If the intra-carrier handover is successful for all users concerned, user_1 is reallocated on best_allocation(Cx) and the algorithm stops, as discussed previously in connection with steps 609, 610.

If no resources are found on carrier Cx for some of the users to be handovered, these users shall be handovered to a carrier Cy different from Cx. As before, the resources used by user_1 on carrier Cw shall be considered available for the handover attempt and no search of the best_allocation is performed for the users in Low_PL_Users_Set(Cx).

If the inter-carrier handovers for the latter users are successful, user_1 is reallocated on the best_allocation over carrier Cx and the algorithm stops.

If neither the inter-carrier handover can be performed for any of the users concerned, the algorithm returns to step 607 and again considers the next best allocation fulfilling inequality (7) in the ordered set S(user_1). If such allocation exists, the algorithm is repeated from step 608, otherwise user_1 cannot be reshuffled.

Note that, in case the algorithm is started by a resource request by a user, user_1 could be the same requesting user. In that case, the algorithm starts after having identified, by the carrier selection procedure shown in Fig. 4, the carrier on which potentially to allocate the service requested. The potential allocation so found would be the current allocation considered in the reshuffling algorithm.

Once user_1 has been processed, the algorithm can be repeated for a predetermined number of users, up to a user_n, being n limited by the available computational capacity.

It is of course to be appreciated that the algorithm stops also when no further best allocation in S(user_1) is available, even if this has not been shown for sake of simplicity of the drawing.

Thus, the reshuffling method is a very general one, which takes into account all changes in the allocation state and in the radio environment of the resources in a cell. It is very flexible, in that the conditions for reallocation of the users, and their number, can be selected by the network operator basing on tuning parameters. Moreover, the resources onto which to reallocate a user are selected on an algorithm that leads to an optimisation of the resource exploitation.

It is evident that the above description has been given only by way of non-limiting example, and that changes and modifications are possible without departing from the scope of the invention as defined by the appended claims.

**Claims**

1. A method of rearranging, based on pathloss values, the allocations of active users on radio resources in a cell of a digital multi-carrier, multi-slot cellular communication system with time division duplexing, wherein such active users use each a number of resource units belonging to one or more uplink and downlink time slots on a same carrier, **characterised in that** said method comprises the steps of:

   - identifying (601) high-pathloss active users experiencing a pathloss exceeding a pathloss threshold and selecting (601) at least one of such high-pathloss active users as a candidate for reallocation on a better quality channel;
   - searching (603) candidate alternative allocations for said selected user;
   - selecting (605) the best one, in terms of a first value of an interference-related quantity, among said candidate alternative allocations;
   - comparing (606) said best candidate alternative allocation and the allocation currently assigned to said selected user; and
   - if the comparison reveals that said best candidate alternative allocation is better, in terms of said first value of the interference-related quantity, than the allocation currently assigned to said selected user, reallocating (609) said selected user on said best candidate alternative allocation.

2. The method as claimed in claim 1, **characterised in that** said at least one selected user is the one allocated on resources having the worst characteristics in terms of said first value of said interference-related quantity.

3. The method as claimed in claim 1 or 2, **characterised in that** it further comprises the steps of:

- identifying (602), on each carrier assigned to the cell, low-pathloss users exhibiting a pathloss sufficiently lower than the pathloss of said selected user;
- checking (608) whether the candidate alternative allocation being tested uses resources already used by said low-pathloss users;
- in the negative, reallocating (609) said selected user on said candidate alternative allocation being tested; and
- in the affirmative, searching (611) for a new allocation on which to handover the low-pathloss users concerned and, if the search is successful (612), handovering said low-pathloss users concerned and reallocating said selected user on the candidate alternative allocation being tested (609).

4. The method as claimed in claim 3, **characterised in that**, if the search for a new allocation on which to handover the low-pathloss users concerned is unsuccessful (612), the candidate alternative allocations following the one being tested are successively tested (607) as candidate alternative allocations for the selected user.

5. The method as claimed in claim 3 or 4, **characterised in that** an intra-carrier handover of the concerned low-pathloss users is first attempted, by changing only the resources to be made available for said selected user, and, if an intra-carrier handover is not possible, an inter-carrier handover is attempted.

6. The method as claimed in any of claims 3 to 5, **characterised in that**, for said handover, the resources used by the current allocation of said selected user are considered available.

7. The method as claimed in any preceding claim, **characterised in that** said search for candidate alternative allocations for said selected user is performed by searching (201), on each carrier on which the resources needed by the user are available, the allocation exhibiting the best characteristics in terms of interference of the concerned time slots, the best allocations so found being said candidate alternative allocations.

8. The method as claimed in claim 7, **characterised in that** the search for the best allocation on a carrier is performed by considering the resources allotted to said low-pathloss users as available for the selected user.

9. The method as claimed in claim 7 or 8, **characterised in that** the search for the best allocation on a carrier is performed by evaluating, for each possible allocation on the carrier:

- an overall value of said interference-related quantity, which overall value is computed for candidate alternative allocations using a same number of resource units and by considering all time slots concerned by an allocation, and
- an average value of said interference-related quantity, computed over all time slots concerned by an allocation and weighted by the number of resource units concerned by the allocation,

the best allocation being the one that exhibits the best first overall value and the best average value.

10. The method as claimed in claims 1, 2 and 9, **characterised in that** said first value of said interference-related quantity is said average value.

11. The method as claimed in claim 10, **characterised in that** said candidate alternative allocations are grouped (604) in a set ordered by descending order of said average value of said interference-related quantity, and are then tested starting from the first one in the ordered set.

12. The method as claimed in any preceding claim, **characterised in that** said interference-related quantity is the priority.

13. The method as claimed in claim 12, **characterised in that** the best allocation on a carrier is determined by the following steps:

- identifying (301) sets of uplink and downlink time slots offering the necessary resource availability;
- clustering (302) said sets by overall number of time slots used;
- computing (303) the overall value of the priority for each cluster;
- identifying (304), for each cluster, the set of uplink and downlink time slots with maximum priority;
- selecting (305), among all sets identified at the previous step, the one that maximises the average value of the priority.

**14.** The method as claimed in any preceding claim, **characterised in that** it is triggered by any of the following events:

  - resource allocation;
  - resource release;
  - channel priority value updating;
  - user pathloss variation.

**15.** The method as claimed in claim 14, **characterised in that** it is triggered by the resource allocation to a user, and the selected user is the user having requested the resource allocation.

**16.** The method as claimed in claims 1 and 15, **characterised in that** it is performed by considering, as currently assigned allocation to said selected user, the allocation found by a channel selection procedure including:

  - the search (201) for the best allocation, in terms of overall and average priority of the concerned time slots, on each carrier on which the resources needed are available; and
  - the selection (202), as possible allocation, of the one provided by the carrier for which the best allocation found by said search exhibits the best overall priority characteristics for the carrier and maximises the carrier occupation.

**17.** The method as claimed in any preceding claim, **characterised in that** it is performed for a predetermined number of high-pathloss users.

**18.** An apparatus for determining, in radio transmission control units of a digital multi-carrier, multi-slot cellular communication system with time division duplexing, a rearrangement of the allocations of active users on radio resources of a cell of said system, based on path loss values, wherein such active users use each a number of resource units belonging to one or more uplink and downlink time slots on a same carrier, the apparatus (500) comprising means (502, 511, 512) for evaluating and storing values of the pathloss of signals transmitted by the users, and means (503, 505, 506, 507) for evaluating and storing values of an interference-related quantity for the resources allocated or allocable to said users, the apparatus (500) being **characterised in that** it comprises:

  - a first processing unit (515), connected to the means (511, 512, 506, 507) for storing the values of the pathloss and the interference-related quantity, and arranged to: identify high-pathloss active users potentially reallocable on better quality resources; select at least one of such high-pathloss active users as a candidate for reallocation; and request the reallocation of said selected user on a new allocation meeting predetermined interference requirements;
  - a second processing unit (517), connected to said first processing unit (515) and to the means (507) for storing the values of the interference-related quantity, and arranged to: identify candidate alternative allocations for said selected user; select, as a potential new allocation for said selected user, the best one, in terms of said interference-related quantity, among said candidate alternative allocations; and provide said first processing unit (515) with information about the selected alternative allocation; and
  - an arithmetic unit (516), connected to said means (507) for storing the interference-related quantity and to said first and second processing units (515, 517), and arranged to compute at least an average value of said interference-related quantity for both the candidate alternative allocation selected as a potential new allocation and an allocation currently assigned to said selected user, said arithmetic unit (516) computing said average value, for each allocation, over all time slots concerned by the allocation and weighting said value by the number of resource units concerned by the allocation, and providing said first and second processing units (515, 517) with the calculated average values;

and **in that** said first processing unit (515) is further arranged to compare the average values of said interference-related quantity for said potential new allocation and for the allocation currently assigned to said selected user and to request the reallocation of the selected user on said potential new allocation if the comparison reveals that the average value of the interference-related quantity is better for said potential new allocation than for the current allocation.

**19.** The apparatus as claimed in claim 18, **characterised in that** said first processing unit (515) is further arranged to: identify, on each carrier assigned to the cell, low-pathloss users exhibiting a pathloss sufficiently lower than the pathloss of said selected user; request, if the potential new allocation requires use of resources already assigned to some of said low-pathloss users, a reallocation of the concerned low-pathloss users; and, if reallocation of said low pathloss users is impossible, successively test candidate alternative allocations having successively decreasing

**EP 1 662 823 B1**

average values of the interference-related quantity, until finding a candidate alternative allocation which does not use resources already assigned to any of said low-pathloss users or which is such that reallocation of said low pathloss users is successful.

20. The apparatus as claimed in claim 18 or 19, **characterised in that** said first processing unit (515) is arranged to start their processing upon recognition of: a request for resource allocation or release; a user pathloss variation; or a variation in a classification of the channel based upon said interference-related quantity.

21. The apparatus as claimed in any of claims 18 to 20, **characterised in that** said arithmetic unit (516) is arranged also to compute an overall value of an interference-related quantity, which first overall value is computed for allocations using a same number of resource units and by considering all time slots concerned by an allocation, and said second processing unit (517) is arranged to identify, on each carrier, the allocation that exhibits the best overall value and the best average value, the allocations so identified being the candidate alternative allocations.

22. The apparatus as claimed in any of claims 18 to 21, **characterised in that** said first processing unit (515) is arranged to select a predetermined plurality of high pathloss users as candidates to reallocation.

**Patentansprüche**

1. Verfahren zum Umordnen der Zuteilungen aktiver Benutzer auf Funkbetriebsmittel in einer Zelle eines digitalen Mehrträger-Mehrschlitz-Zellularkommunikationssystems mit Zeitmultiplex auf der Basis von Wegverlustwerten, wobei solche aktiven Benutzer jeweils eine Anzahl von Betriebsmitteleinheiten benutzen, die zu einem oder mehreren Aufwärtsstrecken- und Abwärtsstrecken-Zeitschlitzen auf einem selben Träger gehören, **dadurch gekennzeichnet, daß** das Verfahren die folgenden Schritte umfaßt:

   - Identifizieren (610) von aktiven Benutzern mit hohen Wegverlusten, die einen Wegverlust erfahren, der eine Wegverlustschwelle übersteigt, und auswählen (601) mindestens eines solcher aktiven Benutzer mit hohen Wegverlusten als einen Kandidaten für Neuzuteilung auf einem Kanal mit besserer Qualität;
   - Suchen (603) nach in Frage kommenden alternativen Zuteilungen für den gewählten Benutzer;
   - Auswählen (605) der besten unter den in Frage kommenden alternativen Zuteilungen im Hinblick auf einen ersten Wert einer störungsbezogenen Größe;
   - Vergleichen (606) der besten in Frage kommenden alternativen Zuteilung und der gerade dem gewählten Benutzer zugewiesenen Zuteilung; und
   - wenn der Vergleich zeigt, daß die beste in Frage kommende alternative Zuteilung im Hinblick auf den ersten Wert der störungsbezogenen Größe besser als die gerade dem gewählten Benutzer zugewiesene Zuteilung ist, Neuzuteilung (609) des gewählten Benutzers auf die beste in Frage kommende alternative Zuteilung.

2. Verfahren nach Anspruch 1, **dadurch gekennzeichnet, daß** der mindestens eine gewählte Benutzer der ist, der auf Betriebsmittel mit den im Hinblick auf den ersten Wert der störungsbezogenen Größe schlechtesten Kenngrößen zugeteilt ist.

3. Verfahren nach Anspruch 1 oder 2, **dadurch gekennzeichnet, daß** es ferner die folgenden Schritte umfaßt:

   - auf jedem der Zelle zugewiesenen Träger identifizieren (602) von Benutzern mit niedrigen Wegverlusten, die einen Wegverlust aufweisen, der ausreichend geringer als der Wegverlust des gewählten Benutzers ist;
   - Prüfen (608), ob die gerade gestestete in Frage kommende alternative Zuteilung Betriebsmittel benutzt, die bereits von den Benutzern mit geringen Wegverlusten benutzt werden;
   - im negativen Fall, Neuzuteilen (609) des gewählten Benutzers auf die gerade getestete in Frage kommende alternative Zuteilung; und
   - im positiven Fall, Suchen (611) nach einer neuen Zuteilung, auf die die betreffenden Benutzer mit geringen Wegverlusten zu übergeben sind, und wenn die Suche erfolgreich (612) ist, übergeben der betreffenden Benutzer mit geringen Wegverlusten und Neuzuteilung des gewählten Benutzers auf die gerade getestete in Frage kommende alternative Zuteilung (609).

4. Verfahren nach Anspruch 3, **dadurch gekennzeichnet, daß**, wenn die Suche nach einer neuen Zuteilung, auf die die betreffenden Benutzer mit geringen Wegverlusten zu übergeben sind, erfolglos ist (612), die in Frage kommenden alternativen Zuteilungen, die der gerade getesteten folgen, sukzessive als in Frage kommende alternative Zutei-

**12**

lungen für den gewählten Benutzer getestet werden (607).

**5.** Verfahren nach Anspruch 3 oder 4, **dadurch gekennzeichnet, daß** zuerst eine Übergabe innerhalb des Trägers der betreffenden Benutzer mit geringen Wegverlusten versucht wird, indem nur die für den gewählten Benutzer zur Verfügung zu stellenden Betriebsmittel geändert werden, und eine Übergabe zwischen Trägern versucht wird, wenn keine Übergabe innerhalb des Trägers möglich ist.

**6.** Verfahren nach einem der Ansprüche 3 bis 5, **dadurch gekennzeichnet, daß** für die Übergabe die von der aktuellen Zuteilung des gewählten Benutzers benutzen Betriebsmittel als verfügbar betrachtet werden.

**7.** Verfahren nach einem der vorhergehenden Ansprüche, **dadurch gekennzeichnet, daß** die Suche nach in Frage kommenden alternativen Zuteilungen für den gewählten Benutzer durchgeführt wird, indem auf jedem Träger, auf dem die von dem Benutzer benötigten Betriebsmittel verfügbar sind, die Zuteilung gesucht wird (201), die im Hinblick auf Störungen der betreffenden Zeitschlitze die besten Kenngrößen aufweist, wobei die so gefundenen besten Zuteilungen die in Frage kommenden alternativen Zuteilungen sind.

**8.** Verfahren nach Anspruch 7, **dadurch gekennzeichnet, daß** die Suche nach der besten Zuteilung auf einem Träger durchgeführt wird, indem die den Benutzern mit geringen Wegverlusten zugeteilten Betriebsmittel als für den gewählten Benutzer verfügbar betrachtet werden.

**9.** Verfahren nach Anspruch 7 oder 8, **dadurch gekennzeichnet, daß** die Suche nach der besten Zuteilung auf einem Träger durchgeführt wird, indem für jede mögliche Zuteilung auf dem Träger folgendes evaluiert wird:

- ein Gesamtwert der störungsbezogenen Größe, wobei der Gesamtwert für in Frage kommende alternative Zuteilungen berechnet wird, die eine selbe Anzahl von Betriebsmitteleinheiten benutzen, und indem alle durch eine Zuteilung betroffenen Zeitschlitze betrachtet werden, und
- ein Mittelwert der störungsbezogenen Größe, die über alle durch eine Zuteilung betroffenen Zeitschlitze berechnet und durch die Anzahl der durch die Zuteilung betroffenen Betriebsmitteleinheiten gewichtet wird,

wobei die beste Zuteilung diejenige ist, die den besten Gesamtwert und den besten Mittelwert aufweist.

**10.** Verfahren nach Anspruch 1, 2 und 9, **dadurch gekennzeichnet, daß** der erste Wert der störungsbezogenen Größe der Mittelwert ist.

**11.** Verfahren nach Anspruch 10, **dadurch gekennzeichnet, daß** die in Frage kommenden alternativen Zuteilungen in einer nach absteigender Reihenfolge des Mittelwerts der störungsbezogenen Größe geordneten Menge gruppiert (604) und dann beginnend mit der ersten in der geordneten Menge getestet werden.

**12.** Verfahren nach einem der vorgehenden Ansprüche, **dadurch gekennzeichnet, daß** die störungsbezogene Größe die Priorität ist.

**13.** Verfahren nach Anspruch 12, **dadurch gekennzeichnet, daß** die beste Zuteilung auf einem Träger durch die folgenden Schritte bestimmt wird:

- Identifizieren (301) von Mengen von Aufwärtstrecken- und Abwärtsstrecken-Zeitschlitzen, die die notwendige Betriebsmittelverfügbarkeit bieten;
- Clustern (302) der Mengen nach Gesamtzahl benutzter Zeitschlitze;
- Berechnen (303) des Gesamtwerts der Priorität für jedes Cluster;
- für jedes Cluster identifizieren (304) der Menge von Aufwärtsstrecken- und Abwärtsstrecken-Zeitschlitzen mit maximaler Priorität;
- unter allen in dem vorigen Schritt identifizierten Mengen auswählen (305) derjenigen, die den Mittelwert der Priorität maximiert.

**14.** Verfahren nach einem der vorhergehenden Ansprüche, **dadurch gekennzeichnet, daß** es durch ein beliebiges der folgenden Ereignisse getriggert wird;

- Betriebsmittelzuteilung;
- Betriebsmittelfreigabe;

- Aktualisierung des Kanalprioritätswerts;
- Benutzer-Wegverlustvariation.

**15.** Verfahren nach Anspruch 14, **dadurch gekennzeichnet, daß** es durch die Betriebsmittelzuteilung zu einem Benutzer getriggert wird, und der gewählte Benutzer der Benutzer ist, der die Betriebsmittelzuteilung angefordert hat.

**16.** Verfahren nach einem der Ansprüche 1 und 15, **dadurch gekennzeichnet, daß** es durchgeführt wird, indem als aktuell zugewiesene Zuteilung zu dem gewählten Benutzer die Zuteilung betrachtet wird, die durch eine Kanalauswahlprozedur gefunden wird, die folgendes umfaßt:

- die Suche (201) nach der besten Zuteilung im Hinblick auf Gesamt- und mittlere Priorität der betreffenden Zeitschlitze auf jedem Träger, auf dem die benötigten Betriebsmittel verfügbar sind; und
- als mögliche Zuteilung die Auswahl (202) derjenigen, die durch den Träger bereitgestellt wird, für den die durch die Suche gefundene beste Zuteilung die besten insgesamten Prioritätskenngrößen für den Träger aufweist und die Trägerbelegung maximiert.

**17.** Verfahren nach einem der vorhergehenden Ansprüche, **dadurch gekennzeichnet, daß** es für eine vorbestimmte Anzahl von Benutzern mit hohen Wegverlusten durchgeführt wird.

**18.** Vorrichtung, die in Funkübertragungssteuereinheiten eines digitalen Mehrträger-, Mehrschlitz-Zellularkommunikationssystems mit Zeitmultiplex eine Umordnung der Zuteilungen aktiver Benutzer auf Funkbetriebsmittel einer Zelle des Systems auf der Basis von Wegverlustwerten bestimmt, wobei solche aktiven Benutzer jeweils eine Anzahl von Betriebsmitteleinheiten benutzen, die zu einem oder mehreren Aufwärtsstrecken- und Abwärtsstreckenzeitschlitzen auf einem selben Träger gehören, wobei die Vorrichtung (500) Mittel (502, 511, 512) zum Evaluieren und Speichern von Werten der Wegverluste von durch die Benutzer gesendeten Signalen und Mittel (503, 505 506, 507) zum Evaluieren und Speichern von Werten einer störungsbezogenen Größe für die den Benutzern zugeteilten oder zuteilbaren Betriebsmittel umfaßt, wobei die Vorrichtung (500) **dadurch gekennzeichnet ist, daß** sie folgendes umfaßt:

- eine erste Verarbeitungseinheit (515), die mit den Mitteln (511, 512, 506, 507) zum Speichern der Werte der Wegverluste und der störungsbezogenen Größe verbunden und für folgendes ausgelegt ist:

  Identifizieren von aktiven Benutzern mit hohen Wegverlusten, die potentiell auf Betriebsmittel besserer Qualität neu zuteilbar sind; wählen mindestens eines solcher aktiven Benutzer mit hohen Wegverlusten als einen Kandidaten für Neuzuteilung; und Anfordern der Neuzuteilung des gewählten Benutzers auf eine neue Zuteilung, die vorbestimmte Störungsanforderungen erfüllt;
  - eine zweite Verarbeitungseinheit (517), die mit der ersten Verarbeitungseinheit (515) und mit dem Mittel (507) zum Speichern der Werte der störungsbezogenen Größe verbunden und für folgendes ausgelegt ist: Identifizieren von in Frage kommenden alternativen Zuteilungen für den gewählten Benutzer; als potentielle neue Zuteilung für den gewählten Benutzer auswählen der besten im Hinblick auf die störungsbezogene Größe unter den in Frage kommenden alternativen Zuteilungen; und Bereitstellen von Informationen über die gewählte alternative Zuteilung für die erste Verarbeitungseinheit (515); und
  - eine Arithmetikeinheit (516), die mit dem Mittel (507) zum Speichern der störungsbezogenen Größe und mit der ersten und mit der zweiten Verarbeitungseinheit (515, 517) verbunden und für folgendes ausgelegt ist: Berechnen mindestens eines Mittelwerts der störungsbezogenen Größe sowohl für die als potentielle neue Zuteilung ausgewählte in Frage kommende alternative Zuteilung als auch für eine gerade dem gewählten Benutzer zugewiesene Zuteilung, wobei die Arithmetikeinheit (516) den Mittelwert für jede Zuteilung über alle durch die Zuteilung betroffenen Zeitschlitze berechnet und den Wert durch die Anzahl von durch die Zuteilung betroffenen Betriebsmitteleinheiten gewichtet, und Bereitstellen der berechneten Mittelwerte für die erste und die zweite Verarbeitungseinheit (515, 517);

und dadurch, daß die erste Verarbeitungseinheit (515) ferner für folgendes ausgelegt ist: Vergleichen der Mittelwerte der störungsbezogenen Größe für die potentielle neue Zuteilung und für die gerade dem gewählten Benutzer zugewiesene Zuteilung und Anfordern der Neuzuteilung des gewählten Benutzers auf die potentielle neue Zuteilung, wenn der Vergleich zeigt, daß der Mittelwert der störungsbezogenen Größe für die potentielle neue Zuteilung besser als für die aktuelle Zuteilung ist.

**19.** Vorrichtung nach Anspruch 18, **dadurch gekennzeichnet, daß** die erste Verarbeitungseinheit (515) ferner für folgendes ausgelegt ist: auf jedem der Zelle zugewiesenen Träger Identifizieren von Benutzern mit geringen Wegverlusten, die einen Wegverlust aufweisen, der ausreichend geringer als der Wegverlust des gewählten Benutzers ist; wenn die potentielle neue Zuteilung die Benutzung von bereits bestimmten der Benutzer mit geringen Wegverlusten zugewiesenen Betriebsmittel erfordert, Anfordern einer Neuzuteilung der betreffenden Benutzer mit geringen Wegverlusten; und, wenn die Neuzuteilung der Benutzer mit geringen Wegverlusten unmöglich ist, sukzessives Testen von in Frage kommenden alternativen Zuteilungen mit sukzessive abnehmenden Mittelwerten der störungsbezogenen Größe, bis eine in Frage kommende alternative Zuteilung gefunden wird, die keine Betriebsmittel benutzt, die bereits irgendwelchen der Benutzer mit geringen Wegverlusten zugewiesen sind oder die dergestalt sind, daß eine Neuzuteilung der Benutzer mit geringen Wegverlusten erfolgreich ist.

**20.** Vorrichtung nach Anspruch 18 oder 19, **dadurch gekennzeichnet, daß** die erste Verarbeitungseinheit (515) dafür ausgelegt ist, ihre Verarbeitung zu starten, wenn folgendes erkannt wird: eine Anforderung der Betriebsmittelzuteilung oder -freigabe; eine Benutzer-Wegverlustvariation; oder eine Variation in einer Klassifikation des Kanals auf der Basis der störungsbezogenen Größe.

**21.** Vorrichtung nach einem der Ansprüche 18 bis 20, **dadurch gekennzeichnet, daß** die Arithmetikeinheit (516) dafür ausgelegt ist, außerdem einen Gesamtwert einer störungsbezogenen Größe zu berechnen, wobei dieser erste Gesamtwert für Zuteilungen, die eine selbe Anzahl von Betriebsmitteleinheiten benutzen, und durch Betrachten aller durch eine Zuteilung betroffenen Zeitschlitze berechnet wird, und die zweite Verarbeitungseinheit (517) dafür ausgelegt ist, auf jedem Träger die Zuteilung zu identifizieren, die den besten Gesamtwert und den besten Mittelwert aufweist, wobei die so identifizierten Zuteilungen die in Frage kommenden alternativen Zuteilungen sind.

**22.** Vorrichtung nach einem der Ansprüche 18 bis 21, **dadurch gekennzeichnet, daß** die erste Verarbeitungseinheit (515) dafür ausgelegt ist, als Kandidaten für neue Neuzuteilung eine vorbestimmte Vielzahl von Benutzern mit hohen Wegverlusten auszuwählen.

## Revendications

**1.** Procédé de remaniement, basé sur les valeurs d'affaiblissement sur le trajet, des attributions d'utilisateurs actifs sur des ressources radio dans une cellule d'un système de communication cellulaire numérique à intervalles de temps multiples et à porteuses multiples avec duplexage à répartition dans le temps, dans lequel de tels utilisateurs actifs utilisent chacun un certain nombre d'unités de ressources appartenant à un ou plusieurs intervalles de temps montants et descendants sur une même porteuse, **caractérisé en ce que** ledit procédé comprend les étapes de :

- identifier (601) les utilisateurs actifs à fort affaiblissement sur le trajet connaissant un affaiblissement sur le trajet excédant un seuil d'affaiblissement sur le trajet et sélectionner (601) au moins un de tels utilisateurs actifs à fort affaiblissement sur le trajet comme un candidat pour une réattribution sur un canal de meilleure qualité ;
- rechercher (603) d'autres attributions candidates pour ledit utilisateur sélectionné ;
- sélectionner (605) la meilleure, en termes d'une première valeur d'une quantité relative à une interférence, parmi lesdites autres attributions candidates ;
- comparer (606) ladite meilleure autre attribution candidate et l'attribution actuellement assignée audit utilisateur sélectionné ; et
- si la comparaison révèle que ladite meilleure autre attribution candidate est meilleure, en termes de ladite première valeur de la quantité relative à une interférence, que l'attribution actuellement assignée audit utilisateur sélectionné, réattribuer (609) ledit utilisateur sélectionné sur ladite meilleure autre attribution candidate.

**2.** Procédé selon la revendication 1, **caractérisé en ce que** ledit au moins un utilisateur sélectionné est celui attribué sur des ressources ayant la pire caractéristique en termes de ladite première valeur de ladite quantité relative à une interférence.

**3.** Procédé selon la revendication 1 ou 2, **caractérisé en ce qu'**il comprend en outre les étapes de :

- identifier (602), sur chaque porteuse assignée à la cellule, les utilisateurs à faible affaiblissement sur le trajet affichant un affaiblissement sur le trajet suffisamment inférieur à l'affaiblissement sur le trajet dudit utilisateur sélectionné ;
- contrôler (608) si l'autre attribution candidate testée utilise des ressources déjà utilisées par lesdits utilisateurs à faible affaiblissement sur le trajet ;

- dans la négative, réattribuer (609) ledit utilisateur sélectionné sur ladite autre attribution candidate testée ; et
- dans l'affirmative, rechercher (611) une nouvelle attribution sur laquelle transférer les utilisateurs à faible affaiblissement sur le trajet concernés et, si la recherche est un succès (612), transférer lesdits utilisateurs à faible affaiblissement sur le trajet concernés et réattribuer ledit utilisateur sélectionné sur l'autre attribution candidate testée (609).

4. Procédé selon la revendication 3, **caractérisé en ce que**, si la recherche d'une nouvelle attribution sur laquelle transférer les utilisateurs à faible affaiblissement sur le trajet concernés est un échec (612), les autres attributions candidates suivant celle testée sont successivement testées (607) comme autres attributions candidates pour l'utilisateur sélectionné.

5. Procédé selon la revendication 3 ou 4, **caractérisé en ce qu'**un transfert intra-porteuse des utilisateurs à faible affaiblissement sur le trajet concernés est d'abord tenté, en ne changeant que les ressources devant être mises à disposition pour ledit utilisateur sélectionné, et, si un transfert intra-porteuse n'est pas possible, un transfert inter-porteuses est tenté.

6. Procédé selon l'une quelconque des revendications 3 à 5, **caractérisé en ce que**, pour ledit transfert, les ressources utilisées par l'attribution actuelle dudit utilisateur sélectionné sont considérées comme disponibles.

7. Procédé selon l'une quelconque des revendications précédentes, **caractérisé en ce que** ladite recherche d'autres attributions candidates pour ledit utilisateur sélectionné est effectuée en recherchant (201), sur chaque porteuse sur laquelle les ressources nécessitées par l'utilisateur sont disponibles, l'attribution affichant la meilleure caractéristique en termes d'interférence des intervalles de temps concernés, les meilleures attributions ainsi trouvées étant lesdites autres attributions candidates.

8. Procédé selon la revendication 7, **caractérisé en ce que** la recherche de la meilleure attribution sur une porteuse est effectuée en considérant les ressources allouées auxdits utilisateurs à faible affaiblissement sur le trajet comme étant disponibles pour l'utilisateur sélectionné.

9. Procédé selon la revendication 7 ou 8, **caractérisé en ce que** la recherche de la meilleure attribution sur une porteuse est effectuée en évaluant, pour chaque attribution possible sur la porteuse :

- une valeur générale de ladite quantité relative à une interférence, laquelle valeur générale est calculée pour les autres attributions candidates utilisant un même nombre d'unités de ressources et en considérant tous les intervalles de temps concernés par une attribution ; et
- une valeur moyenne de ladite quantité relative à une interférence, calculée sur tous les intervalles de temps concernés par une attribution et pondérée par le nombre d'unités de ressources concernées par l'attribution,

la meilleure attribution étant celle qui affiche la meilleure première valeur générale et la meilleure valeur moyenne.

10. Procédé selon les revendications 1, 2 et 9, **caractérisé en ce que** ladite première valeur de ladite quantité relative à une interférence est ladite valeur moyenne.

11. Procédé selon la revendication 10, **caractérisé en ce que** lesdites autres attributions candidates sont groupées (604) en un ensemble ordonné en ordre décroissant de ladite valeur moyenne de ladite quantité relative à une interférence, et sont ensuite testées en commençant par la première dans l'ensemble ordonné.

12. Procédé selon l'une quelconque des revendications précédentes, **caractérisé en ce que** ladite quantité relative à une interférence est la priorité.

13. Procédé selon la revendication 12, **caractérisé en ce que** la meilleure attribution sur une porteuse est déterminée par les étapes suivantes :

- identifier (301) des ensembles d'intervalles de temps montants et descendants offrant la disponibilité des ressources nécessaires ;
- regrouper (302) lesdits ensembles par nombre général d'intervalles de temps utilisés ;
- calculer (303) la valeur générale de la priorité pour chaque groupe ;
- identifier (304), pour chaque groupe, l'ensemble d'intervalles de temps montants et descendants avec la priorité maximum ;
- sélectionner (305), parmi tous les ensembles identifiés à l'étape précédente, celui qui maximise la valeur moyenne de la priorité.

**14.** Procédé selon l'une quelconque des revendications précédentes, **caractérisé en ce qu'**il est déclenché par l'un quelconque des événements suivants :

- attribution de ressources ;
- libération de ressources ;
- mise à jour de la valeur de priorité du canal ;
- variation de l'affaiblissement sur le trajet de l'utilisateur.

**15.** Procédé selon la revendication 14, **caractérisé en ce qu'**il est déclenché par l'attribution de ressources à un utilisateur, et l'utilisateur sélectionné est l'utilisateur ayant demandé l'attribution de ressources.

**16.** Procédé selon les revendications 1 et 15, **caractérisé en ce qu'**il est exécuté en considérant, comme attribution actuellement assignée audit utilisateur sélectionné, l'attribution trouvée par une procédure de sélection de canal incluant :

- la recherche (201) de la meilleure attribution, en termes de priorité générale et moyenne des intervalles de temps concernés, sur chaque porteuse sur laquelle les ressources nécessaires sont disponibles ; et
- la sélection (202), comme attribution possible, de celle fournie par la porteuse pour laquelle la meilleure attribution trouvée par ladite recherche affiche la meilleure caractéristique générale de priorité pour la porteuse et maximise l'occupation de porteuse.

**17.** Procédé selon l'une quelconque des revendications précédentes, **caractérisé en ce qu'**il est exécuté pour un nombre prédéterminé d'utilisateurs à fort affaiblissement sur le trajet.

**18.** Appareil pour déterminer, dans des unités de contrôle de transmission radio d'un système de communication cellulaire numérique à intervalles de temps multiples et à porteuses multiples avec duplexage à répartition dans le temps, un remaniement des attributions d'utilisateurs actifs sur les ressources radio d'une cellule dudit système, basé sur les valeurs d'affaiblissement sur le trajet, dans lequel de tels utilisateurs actifs utilisent chacun un certain nombre d'unités de ressources appartenant à un ou plusieurs intervalles de temps montants et descendants sur une même porteuse, l'appareil (500) comprenant des moyens (502, 511, 512) pour évaluer et stocker des valeurs de l'affaiblissement sur le trajet de signaux transmis par les utilisateurs, et des moyens (503, 505, 506, 507) pour évaluer et stocker des valeurs d'une quantité relative à une interférence pour les ressources attribuées ou attribuables auxdits utilisateurs, l'appareil (500) étant **caractérisé en ce qu'**il comprend :

- une première unité de traitement (515), connectée aux moyens (511, 512, 506, 507) pour stocker les valeurs de l'affaiblissement sur le trajet et de la quantité relative à une interférence, et agencée pour : identifier les utilisateurs actifs à fort affaiblissement sur le trajet potentiellement réattribuables sur des ressources de meilleure qualité ; sélectionner au moins un de tels utilisateurs actifs à fort affaiblissement sur le trajet comme un candidat pour une réattribution ; et demander la réattribution dudit utilisateur sélectionné sur une nouvelle attribution satisfaisant à des exigences d'interférence prédéterminées ;
- une deuxième unité de traitement (517), connectée à ladite première unité de traitement (515) et au moyen (507) pour stocker les valeurs de la quantité relative à une interférence, et agencée pour : identifier d'autres attributions candidates pour ledit utilisateur sélectionné ; sélectionner, comme une nouvelle attribution potentielle pour ledit utilisateur sélectionné, la meilleure, en termes de ladite quantité relative à une interférence, parmi lesdites autres attributions candidates ; et fournir à ladite première unité de traitement (515) des informations à propos de l'autre attribution sélectionnée ; et
- une unité arithmétique (516), connectée audit moyen (507) pour stocker la quantité relative à une interférence et auxdites première et deuxième unités de traitement (515, 517), et agencée pour calculer au moins une valeur moyenne de ladite quantité relative à une interférence pour l'autre attribution candidate sélectionnée comme une nouvelle attribution potentielle et pour une attribution actuellement assignée audit utilisateur sélectionné, ladite unité arithmétique (516) calculant ladite valeur moyenne, pour chaque attribution, sur tous les intervalles de temps concernés par l'attribution et pondérant ladite valeur par le nombre d'unités de ressources concernées par l'attribution, et fournissant auxdites première et deuxième unités de traitement (515, 517) les valeurs moyennes calculées ;

et **en ce que** ladite première unité de traitement (515) est en outre agencée pour comparer les valeurs moyennes de ladite quantité relative à une interférence pour ladite nouvelle attribution potentielle et pour l'attribution actuellement assignée audit utilisateur sélectionné et pour demander la réattribution de l'utilisateur sélectionné sur ladite nouvelle attribution potentielle si la comparaison révèle que la valeur moyenne de la quantité relative à une interférence est meilleure pour ladite nouvelle attribution potentielle que pour l'attribution actuelle.

**19.** Appareil selon la revendication 18, **caractérisé en ce que** ladite première unité de traitement (515) est en outre agencée pour : identifier, sur chaque porteuse assignée à la cellule, des utilisateurs à faible affaiblissement sur le trajet affichant un affaiblissement sur le trajet suffisamment inférieur à l'affaiblissement sur le trajet dudit utilisateur sélectionné ; demander, si la nouvelle attribution potentielle requiert l'utilisation de ressources déjà assignées à certains desdits utilisateurs à faible affaiblissement sur le trajet, une réattribution des utilisateurs à faible affaiblissement sur le trajet concernés ; et, si une réattribution desdits utilisateurs à faible affaiblissement sur le trajet est impossible, tester successivement d'autres attributions candidates ayant des valeurs moyennes de la quantité relative à une interférence successivement décroissantes, jusqu'à trouver une autre attribution candidate qui n'utilise pas de ressources déjà assignées à l'un quelconque desdits utilisateurs à faible affaiblissement sur le trajet ou qui est telle que la réattribution desdits utilisateurs à faible affaiblissement sur le trajet est un succès.

**20.** Appareil selon la revendication 18 ou 19, **caractérisé en ce que** ladite première unité de traitement (515) est agencée pour commencer le traitement à la reconnaissance : d'une demande d'attribution ou de libération de ressources ; d'une variation de l'affaiblissement sur le trajet d'un utilisateur ; ou d'une variation dans un classement du canal sur la base de ladite quantité relative à une interférence.

**21.** Appareil selon l'une quelconque des revendications 18 à 20, **caractérisé en ce que** ladite unité arithmétique (516) est agencée également pour calculer une valeur générale d'une quantité relative à une interférence, laquelle première valeur générale est calculée pour des attributions utilisant un même nombre d'unités de ressources et en considérant tous les intervalles de temps concernés par une attribution, et ladite deuxième unité de traitement (517) est agencée pour identifier, sur chaque porteuse, l'attribution qui affiche la meilleure valeur générale et la meilleure valeur moyenne, les attributions ainsi identifiées étant les autres attributions candidates.

**22.** Appareil selon l'une quelconque des revendications 18 à 21, **caractérisé en ce que** ladite première unité de traitement (515) est agencée pour sélectionner une pluralité prédéterminée d'utilisateurs à fort affaiblissement sur le trajet comme candidats à une réattribution.

EP 1 662 823 B1

FIG. 1

```
            ┌──────────────────┐ ╱ 200                    ┌─────────┐ ╱ 300
            │     START        │                           │  START  │
            │ (BAND REQUEST)   │                           └─────────┘
            └──────────────────┘                                │
                     │                                          ▼
                     │ ╱ 201                          ┌──────────────────────┐ ╱ 301
                     ▼                                 │   IDENTIFICATION OF  │
          ┌──────────────────────┐                     │ SUITABLE_ALLOCATIONS ON │
          │ DETERMINATION OF THE BEST │                 │      CARRIER Ci      │
          │ ALLOCATION ON EACH CARRIER │                └──────────────────────┘
          └──────────────────────┘                                │
                     │ ╱ 202                                       ▼ ╱ 302
                     ▼                                 ┌──────────────────────┐
          ┌──────────────────────┐                     │ CLUSTERING OF SUITABLE_ │
          │   CARRIER SELECTION   │                     │ ALLOCATIONS ON A PER NUMBER │
          └──────────────────────┘                     │ OF INVOLVED TIME SLOTS BASIS │
                     │                                 └──────────────────────┘
                     ▼ ╱ 203                                      │
          ┌──────────┐                                            ▼ ╱ 303
          │   STOP   │                                 ┌──────────────────────┐
          └──────────┘                                 │ JP IS COMPUTED FOR CLUSTERED │
                                                       │  SUITABLE_ALLOCATIONS  │
                                                       └──────────────────────┘
                                                                  │
                                                                  ▼ ╱ 304
                                                       ┌──────────────────────┐
                                                       │ SUITABLE_ALLOCATION WITH │
                                                       │ MAXIMUM JP IS SELECTED IN │
                                                       │     EACH CLUSTER      │
                                                       └──────────────────────┘
                                                                  │
                                                                  ▼ ╱ 305
                                                       ┌──────────────────────┐
                                                       │ SUITABLE_ALLOCATION WITH │
                                                       │ MAXIMUM RUAP IS SELECTED AS │
                                                       │ BEST_ALLOCATION FOR CARRIER │
                                                       │          Ci          │
                                                       └──────────────────────┘
                                                                  │
                                                                  ▼ ╱ 306
                                                       ┌──────────┐
                                                       │   STOP   │
                                                       └──────────┘
```

FIG. 2

FIG. 3

400

START
[BUILDING OF S(NEW_USER) WITH
BEST_ALLOCATIONS OF ALL
CARRIERS]

401

EVALUATE RUAP OF BEST_
ALLOCATIONS IN S(NEW_USER)
ACCORDING TO PRIORITY BY-
PASS FACTOR

402

ORDER S(NEW_USER) FIRST
ACCORDING TO EVALUATION
ABOVE, THEN BY CRJP, AVCP AND
RUAP

403

FIRST BEST_ALLOCATION IN
ORDERED S(NEW_USER) IS
SELECTED AS CHANNEL FOR
ALLOCATING THE SERVICE

STOP 404

FIG. 4

FIG. 5

EP 1 662 823 B1

START —600

601
IDENTIFICATION OF HIGH
PATHLOSS USERS AND SELECTION
OF USER_1

602
BUILDING OF LOW_PL_USERS_SET
FOR EACH CARRIER ASSIGNED TO
CELL

603
DETERMINATION OF BEST
ALLOCATION FOR EACH CARRIER
ASSIGNED TO CELL AND BUILDING
OF S(USER_1)

604
ORDERING OF S(USER_1) BY
DECREASING RUAP VALUES

605
FIRST BEST ALLOCATION IN
ORDERED S(USER_1) IS SELECTED

607
NEXT BEST ALLOCATION
IN ORDERED S(USER_1)
IS SELECTED

606
RUAP
(BEST ALLOCATION) >
RUAP(CURRENT
ALLOCATION)?      NO

YES      608
DOES BEST
ALLOCATION USE
RESOURCES ALREADY IN USE
BY USERS IN LOW_PL_
USERS_SET?      NO

YES      611
HANDOVER OF
CONCERNED USERS IS
ATTEMPTED

612
NO      HANDOVER
SUCCESSFUL?      YES

609
USER_1 IS
REALLOCATED ON BEST
ALLOCATION

STOP —610

FIG. 6

23

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5956642 A
- EP 1198964 A

- EP 1204287 A

**Non-patent literature cited in the description**

- **Y. FURUYA ; Y. AKAIWA.** Channel Segregation, a Distributed Adaptive Channel Allocation Scheme for Mobile Communication Systems. *IEICE Transactions,* June 1991, vol. E 74 (6), 1531-1537